Europäisches Patentamt

**European Patent Office**

Office européen des brevets

(11) Publication number: **0 105 758**
A1

## (12) EUROPEAN PATENT APPLICATION

(21) Application number: **83306002.3**

(22) Date of filing: **04.10.83**

(51) Int. Cl.³: **G 01 F 15/18**
**E 03 B 7/07, F 16 L 37/28**
**F 16 L 29/00**

(30) Priority: **05.10.82 GB 8228351**

(43) Date of publication of application:
**18.04.84 Bulletin 84/16**

(84) Designated Contracting States:
**AT BE CH DE FR GB IT LI LU NL SE**

(71) Applicant: **Hudson, David Rosser**
**7 Marine Parade**
**Penarth Glamorgan CF6 2BE(GB)**

(72) Inventor: **Hudson, David Rosser**
**7 Marine Parade**
**Penarth Glamorgan CF6 2BE(GB)**

(74) Representative: **Lainé, Simon James et al,**
**Wynne-Jones, Lainé & James Morgan Arcade Chambers**
**33, St.Mary Street**
**Cardiff CF1 2AB(GB)**

(54) Fluid control assembly.

(57) A surface box for a stopcock (6) and water meter (7) has a housing (1) of a moulded plastics with ports (3,4;31) for the external connection of pipes. A body (5,34) with internal ducts (8;36) fits within the box and serves as a mounting for the stopcock and meter. Connections are made between these ducts and the ports when the body is fitted, the making of the connections causing non-return valves (11, 32) to open in the ports and complete a passage through the body. The body may have movable pipe extensions (9;18;23) that can be protruded once the body is in place to engage the valves, or it may have fixed extensions (35) that operate the valve as the body is fitted.

FIG. 2.

EP 0 105 758 A1

"Fluid Control Assembly"

This invention is concerned with a unit which enables a control and/or metering unit for fluid flow to be interconnected readily with a fluid supply. It is particularly applicable to metered water supplies for buildings where, normally, a stopcock and a water meter will be fitted outside to the underground mains pipe and made accessible in a sunken housing.

It has been proposed, for example in published European Specification No. 0061908, to provide a special box which will be set into the ground and having inlet and outlet ports which can be connected to pipework buried under the ground. A stopcock and/or a water meter can then be mounted within the box and connected up to fittings leading from the inlet and outlet ports. However, there are some problems still to be overcome. One is that if the unit inserted into the box has to be removed for repair or replacement this will expose the inlet and outlet ports, and so fluid flow would have to be shut down at some other remote position in the pipeline.

According to the present invention there is provided a fluid control or metering assembly comprising a top-lidded housing for burying upright in the ground with access through the top, inlet and outlet ports incorporating non-return valves and being adapted to receive plumbing fittings for the external attachment of pipes, and a removable mounting for a fluid control or metering device, the mounting being such that when it and said device are fitted, an enclosed passage is formed via said device between said inlet and outlet ports, the mounting having means for sealing to respective ports, opening, the associated valve, and defining portions of the enclosed passage when the mounting is fully fitted, and allowing the non-return valves to close when it is withdrawn.

Thus the mounting can be disconnected from the inlet and outlet ports without incurring leakage from the external pipes. They will automatically be closed off by the non-return valves.

In one preferred form the sealing and opening means comprise an adjustable pipe for each port, each pipe being movable between a retracted position clear of its associated port and an extended position in which it seals to the port and opens the associated valve.

Each movable pipe may carry an operating member which can be locked in either of the two positions of the pipe. For example, the operating member could be rotatable about the pipe axis when registered with one or other of two detents in the mounting, engagement of the operating member in either detent locking the pipe. Alternatively, each pipe may be movable by screw means. This may take the form of a nut threaded on the pipe, and confined between the housing and the mounting, the pipe being held against rotation. Alternatively, the pipe may have screw-threaded engagement with the mounting and be rotatable by a formation external of the mounting.

In another preferred form, the sealing and opening means comprise spigots and the withdrawal and fitting movement of the mounting is parallel to the spigot axes, whereby as fitting is completed, the ends of the spigots open the valves.

The invention may be performed in various ways and some embodiments thereof will now be described, by way of example, with reference to the accompanying drawings, in which:

Figure 1 is a side view of a surface box with a stopcock and water meter,

Figure 2 is a diagrammatic vertical section through part of a mounting arrangement for the stopcock and water meter applicable to the box of Figure 1,

Figure 3 is a plan view of part of the mounting arrangement shown in Figure 2,

Figure 4 is a section similar to Figure 2 of an alternative mounting arrangement,

Figure 5 is a section similar to Figures 2 and 4 of another mounting arrangement, and

Figure 6 is a diagrammatic vertical section through part of the bottom of a modified housing.

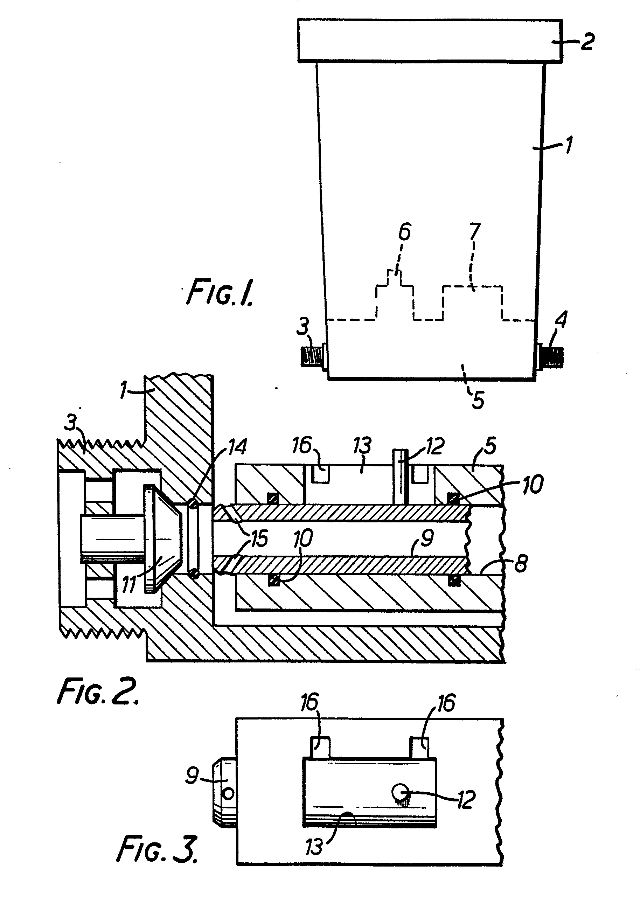

Figure 1 illustrates a housing in the form of a box 1 in whose upper end fits a removable lid 2. At the base of the housing there are inlet and outlet fittings 3 and 4 for the external connection of water pipes. A mounting block 5, illustrated diagrammatically in dashed outline, can be inserted into the box 1 when the lid 2 is removed and connected up to the fittings 3 and 4. This mounting block incorporates or carries a stopcock assembly 6 and a water meter assembly 7 and provides a continuous enclosed passageway from the fitting 3 through the stopcock 6 and metering assembly 7 to the other fitting 4.

Figures 2 and 3 illustrate a detail of a lower portion of the box 1 of Figure 1 and part of the mounting block 5. At opposite ends the block 5 has horizontal bores 8, one leading to the stopcock and the other from the meter. Each bore receives a pipe 9 which is axially and part-rotationally movable and surrounded at axially spaced intervals by O-ring seals 10. The fittings 3 and 4 incorporate internal non-return valves 11 which, when shut, prevent water flowing into the housing. Thus the pipes can be connected and filled even though the housing may be empty.  When the mounting block 5 has been lowered into the box 1 the pipes 9 will be slid outwardly by means of respective knobs 12 fixed to them and projecting up through slots 13 in the block 5.  The outer end of each pipe 9 first engages a ring seal 14 in the mouth of the opening to the fitting 3 (or 4) and then unseats the head of the respective valve 11.  This allows water to flow through passageways 15 in the outer ends of the pipes 9 and completes the passage through the block 5 and its fittings.  Each knob can be locked in either of two extreme positions, one with the pipe 9 withdrawn into the block 5 and the other with the pipe moved outwardly to open the valve 11.  This is achieved by rotating it, with the pipe 9, to engage one or other of two notches 16 laterally off the ends of the slot 13.

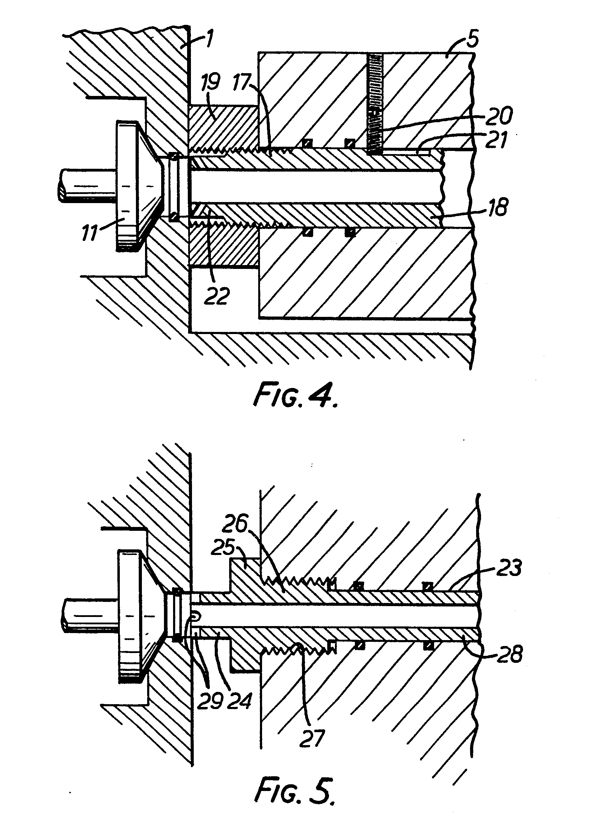

Various other arrangements are possible for extending or retracting the pipes.  For example, as shown in Figure 4, an outer end portion 17 of each pipe 18 is screw-threaded to receive a nut 19.  This can readily be adjusted by a ratchet spanner extended downwardly into the housing.  When turned in one direction, the nut will bear against the end of the block 5 and cause the pipe to extend into engagement with the valve 11. The pipe will be held against rotation by a stud 20 engaged in a groove 21.  When turned in the other direction. the nut will bear against the inside wall of the housing 1 and cause the pipe to retract. The thread pitch may be fine enough to ensure self-locking, but additional measures can be taken if desired. The extreme outer end portion 22 of the pipe 18 is of slightly reduced diameter, and non-threaded, to co-operate with the valve head as before, and also to retract within the nut.

In another arrangement, shown in Figure 5, the pipe 23 has, in sequence, a nose portion 24 for valve engagement, a nut portion 25 or other gripping formation by which the pipe can be rotated and thus moved in or out, a screw-threaded portion 26 which engages in a threaded counter bore 27 in the block 5, and a smooth inner portion 28 of reduced diameter compared with portion 26, which fits the bore 8. The operation of this will be self-evident. In this Figure an alternative to the passageways 15 is shown. The outer end face of the pipe simply has cut-outs 29, giving the end a scalloped effect.

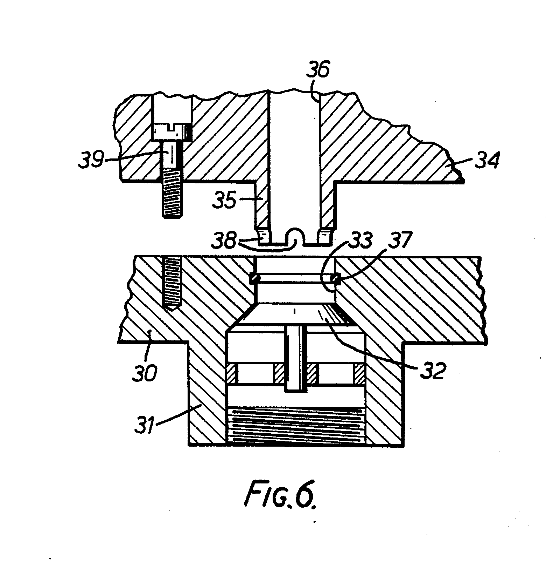

It may not always be convenient or possible to lead the external pipes horizontally into the box. For example, if those pipes have to be very deeply buried, it would be best to lead them up vertically to the underside of the box. A similar valve arrangement can be provided, and a simpler mounting block, as

SL/SF                          - 6 -

shown in Figure 6.

Here, the box 30 has an underside inlet 31 with a non-return valve 32, similar to those of previous Figures, which closes off port 33. The mounting block 34 for the stopcock and water meter has a downwardly projecting cylindrical spigot 35 whose internal passage 36 leads to the fittings on the block. Its outer surface is a close fit, with the aid of seal 37, in the port 33, and its lower end has passageways or cut-outs 38. When the block 34 is lowered into the box 30, the spigot 35 enters the port 33 and completes the seal. As the block is fastened down, for example by screws 39 or some more rapid action device such as a toggle mechanism acting on the upper side of the block, the end of the spigot engages and opens the valve 32.

A similar arrangement may be provided for the outlet connection, or there may be a combination of horizontal and vertical connections.

CLAIMS

1. A fluid control or metering assembly comprising a top-lidded housing for burying upright in the ground with access through the top, inlet and outlet ports adapted to receive plumbing fittings for the external attachment of pipes, and a mounting for a fluid control or metering device, the mounting being such that when said device is fitted, an enclosed passage is formed via said device between said inlet and outlet ports, characterised in that the mounting is removable and has means (9, 18, 23, 35) for connecting and sealing to respective ports (3, 4, 31) and in that the ports incorporate non-return valves (11, 32), the connecting and sealing means being arranged to open the associated valves and define portions of the enclosed passage when the mounting is fully fitted, and to allow the non-return valves to close when it is withdrawn.

2. An assembly as claimed in claim 1, characterised in that the connecting and sealing means comprise an adjustable pipe (9, 18, 23) for each port, each pipe being movable between a retracted position clear of its associated port and an extended position in which it seals to the port and opens the associated valve.

3. An assembly according to claim 2, characterised in that each pipe (9) carries an operating member (12) which can be locked in either of the two positions of the pipe.

4. An assembly according to claim 3, characterised in that said operating member (12) can rotate about the axis of the pipe when registered with one or other of two detents (16) in said mounting, engagement of the operating member in either detent locking the pipe.

5. An assembly as claimed in claim 2, characterised in that each pipe is movable by screw means.

6. An assembly as claimed in claim 5, characterised in that the screw means is a nut (19) threaded on the pipe and confined between the housing and the mounting, the pipe (18) being held against rotation.

7. An assembly as claimed in claim 5, characterised in that each pipe (23) has screw-threaded engagement with the mounting and is rotatable by a formation (25) external of the mounting.

8. An assembly as claimed in claim 1, characterised in that the connecting and sealing means comprise spigots (35) and the withdrawal and fitting movement of the mounting (34) is parallel to the spigot axes, whereby as fitting is completed, the ends of the spigots open the valves (32).

FIG. 1.

FIG. 2.

FIG. 3.

FIG. 4.

FIG. 5.

FIG.6.

0105758

European Patent Office

**EUROPEAN SEARCH REPORT**

Application number

EP 83 30 6002

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 517 198 (SCHMIDT)<br>* Figure; page 2, last paragraph - page 4, first paragraph; page 4, second paragraph - page 9, fourth paragraph * | 1-5,7 | G 01 F 15/18<br>E 03 B 7/07<br>F 16 L 37/28<br>F 16 L 29/00 |
| Y | US-A-2 181 758 (GOON et al.)<br>* Figures; page 1, right-hand column, line 15 - page 2, right-hand column, line 27 * | 1,5-7 | |
| Y | US-A-1 774 918 (HALL et al.)<br><br>* Figures; page 1, left-hand column, lines 28-39; page 2, left-hand column, lines 25-57 * | 1-3,5,6,8 | |
| Y | FR-A-2 129 768 (WALKER CROSSWELLER & CY. LTD.)<br>* Figures 1-4 * | 1,5,8 | **TECHNICAL FIELDS SEARCHED (Int. Cl. ³)**<br><br>G 01 F<br>F 16 L |
| Y | GB-A- 789 730 (LEWIS)<br>* Figures; page 1, lines 27-46; page 1, line 80 - page 2, line 15 * | 1,8 | |
| A | US-A-3 173 295 (MAGLEBY)<br>* Figures * | 1 | |

--- -/-

The present search report has been drawn up for all claims

| Place of search | Date of completion of the search | Examiner |
|---|---|---|
| THE HAGUE | 16-01-1984 | NUIJTEN E.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

0105758

**European Patent Office**

**EUROPEAN SEARCH REPORT**

Application number

EP 83 30 6002

Page 2

| Category | Citation of document with indication, where appropriate, of relevant passages | Relevant to claim | CLASSIFICATION OF THE APPLICATION (Int. Cl. ³) |
|---|---|---|---|
| A | DE-A-2 349 441 (GEBR. BEUL & CO.)<br>* Figure * | 1 | |
| A | FR-A-2 089 697 (HAWLE F.)<br>* Figure * | 1 | |

DOCUMENTS CONSIDERED TO BE RELEVANT

TECHNICAL FIELDS SEARCHED (Int. Cl. ³)

The present search report has been drawn up for all claims

| Place of search | Date of completion of the search | Examiner |
|---|---|---|
| THE HAGUE | 16-01-1984 | NUIJTEN E.M. |